# EUROPEAN PATENT APPLICATION

(11) **EP 4 633 103 A1**
(43) Date of publication of application: **15.10.2025**
(21) Application number: 23915814.0
(22) Date of filing: 26.12.2023
(51) Int. Cl.: H04L 41/0894

(54) **INFORMATION PROCESSING METHOD AND APPARATUS, AND NETWORK DEVICE AND STORAGE MEDIUM**

(30) Priority: 09.01.2023 CN 202310029113
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: SHI, Xiaonan, Beijing 100053 (CN)
(74) Representative: J A Kemp LLP
(86) International application number: PCT/CN2023/142098
(87) International publication number: WO 2024/149061

(57) **Abstract**

Disclosed in the present application are an information processing method and apparatus, and a network device and a storage medium. The method comprises: receiving first information; and determining a first network policy according to the first information, wherein the first information is used for representing a relationship between at least two data streams.

## Description

### CROSS-REFERENCE TO RELATED APPLICATION

This application is based on and claims priority to Chinese patent application No. 202310029113.3 filed on January 9, 2023, the disclosure of which is hereby incorporated by reference in its entirety.

### TECHNICAL FIELD

The present application relates to the field of wireless technologies, and particularly relates to an information processing method, an apparatus, a network device, and a storage medium.

### BACKGROUND

For multimedia traffics such as metaverse and Extended Reality (XR), multiple data streams usually exist in a same traffic scenario. In practical applications, different data streams may be transmitted from different applications. In related technologies, synchronization between multiple data streams may not be ensured.

### SUMMARY

In order to solve related technical problems, embodiments of the present application provide an information processing method, an apparatus, a network device, and a storage medium.

The technical solution of the embodiments of the present application is realized as follows.

The embodiments of the present application provide an information processing method, which is executed by a first network device. The method includes the following operations.

First information is received.

A first network policy is determined according to the first information. The first information is used to represent a relationship between at least two data streams.

In an alternative embodiment, the relationship between the at least two data streams includes at least one of the following:
the at least two data streams belong to a data stream group;
the at least two data streams constitute a data stream group;
the at least two data streams belong to a same traffic;
the at least two data streams carry a same traffic; or
the at least two data streams are related to a same traffic.

In an alternative embodiment, the first information includes at least one of the following:
application information, Internet Protocol (IP) quintuple information of an application, application group information, an Quality of Service (QoS) requirement of the application, a common identifier (ID), data stream group information, network slice information, a Data Network Name (DNN), a QoS monitoring requirement, time information related to the first network policy, or a time interval during which the first network policy is executed.

The QoS monitoring requirement includes at least one of a reporting frequency, a reporting duration, or a reporting path.

In an alternative embodiment, the first information is transmitted by an Application Function (AF) or a Network Exposure Function (NEF).

In an alternative embodiment, the first network policy includes at least one of the following:
the at least two data streams are carried by a same Protocol Data Unit (PDU) session;
network slice selection policies or User Equipment (UE) Routing Selection Policies (URSPs) for the at least two data streams are the same;
when a URSP corresponding to at least one data stream in a data stream group changes, URSPs corresponding to other data streams in the data stream group are updated;
the at least two data streams correspond to at least one of a same network slice or a same Data Network Name (DNN); or
policy information related to Quality of Service (QoS) monitoring for the at least two data streams is the same. The policy information includes at least one of a reporting frequency, a reporting duration, or a reporting path.

In an alternative embodiment, the first network policy includes at least one of the following:
in case that the at least two data streams correspond to different network slices, at least one of User Equipment (UE) Routing Selection Policies (URSPs), URSP priorities or network slice selection policies corresponding to the data streams is updated; or
in case that the at least two data streams correspond to different network slices, coordination transmission of the at least two data streams in different network slices is supported.

In an alternative embodiment, the method further includes an operation of transmitting the first network policy to a second network device.

In an alternative embodiment, the first network device includes a Policy Control Function (PCF).

An embodiment of the present application further provides an information processing method, which is executed by a second network device. The method includes the following operations.

A first network policy is received and the first network policy is transmitted to at least one terminal.

In an alternative embodiment, the first network policy includes at least one of the following:
at least two data streams are carried by a same Protocol Data Unit (PDU) session;
network slice selection policies or User Equipment (UE) Routing Selection Policies (URSPs) for the at least two data streams are the same;
when a URSP corresponding to at least one data stream in a data stream group changes, URSPs corresponding to other data streams in the data stream group are updated;
the at least two data streams correspond to at least one of a same network slice or a same Data Network Name (DNN); or
policy information related to Quality of Service (QoS) monitoring for the at least two data streams is the same. The policy information includes at least one of a reporting frequency, a reporting duration, or a reporting path.

In an alternative embodiment, the first network policy includes at least one of the following:
in case that at least two data streams correspond to different network slices, at least one of User Equipment (UE) Routing Selection Policies (URSPs), URSP priorities or network slice selection policies corresponding to the data streams is updated; or
in case that at least two data streams correspond to different network slices, coordination transmission of the at least two data streams in different network slices is supported.

In an alternative embodiment, the second network device includes one of: a Network Exposure Function (NEF), a Radio Access Network (RAN), a Unified Data Repository (UDR), a Unified Data Management (UDM) Function, an Access and Mobility Management Function (AMF), a Session Management Function (SMF) or an Application Function (AF).

The embodiments of the present application further provide an information processing method, which is executed by a third network device. The method includes an operation of transmitting at least two data streams to a first User Plane Function (UPF).

The first UPF represents a UPF having packet granularity coordination capability and the at least two data streams are transmitted based on a first network policy.

In an alternative embodiment, the first network policy includes at least one of the following:
the at least two data streams are carried by a same Protocol Data Unit (PDU) session;
network slice selection policies or User Equipment (UE) Routing Selection Policies (URSPs) for the at least two data streams are the same;
when a URSP corresponding to at least one data stream in a data stream group changes, URSPs corresponding to other data streams in the data stream group are updated;
the at least two data streams correspond to at least one of a same network slice or a same Data Network Name (DNN); or
policy information related to Quality of Service (QoS) monitoring for the at least two data streams is the same. The policy information includes at least one of a reporting frequency, a reporting duration, or a reporting path.

In an alternative embodiment, the first network policy includes at least one of the following:
in case that the at least two data streams correspond to different network slices, at least one of User Equipment (UE) Routing Selection Policies (URSPs), URSP priorities or network slice selection policies corresponding to the data streams is updated; or
in case that the at least two data streams correspond to different network slices, coordination transmission of the at least two data streams in different network slices is supported:

In an alternative embodiment, the operation of transmitting the at least two data streams to the first UPF includes: transmitting the at least two data streams to the first UPF in case that at least one terminal initiates a PDU session or a PDU session update.

The at least one terminal represents at least one terminal for transmitting the at least two data streams.

In an alternative embodiment, UPF having the packet granularity coordination capability represents a UPF capable of synchronously processing different data packets corresponding to a same time in the at least two data streams.

In an alternative embodiment, the third network device includes one of a PCF, an AMF, a RAN, a SMF, and an AF.

The embodiments of the present application further provide an information processing apparatus, which includes a first receiving unit and a determining unit.

The first receiving unit is configured to receive first information.

The determining unit is configured to determine a first network policy according to the first information.

The first information is used to represent a relationship between at least two data streams.

The embodiments of the present application further provide an information processing apparatus, which includes a second receiving unit and a first transmitting unit.

The second receiving unit is configured to receive a first network policy.

The first transmitting unit is configured to transmit the first network policy to at least one terminal.

The embodiments of the present application further provide an information processing apparatus, which includes a second transmitting unit.

The second transmitting unit is configured to transmit at least two data streams to a first UPF.

The first UPF represents a UPF having packet granularity coordination capability. The at least two data streams are transmitted based on a first network policy.

The embodiments of the present application further provide a first network device, which includes: a first processor and a first communication interface.

The first communication interface is configured to receive first information.

The first processor is configured to determine a first network policy according to the first information.

The first information is used to represent a relationship between at least two data streams.

The embodiments of the present application further provide a second network device, which includes: a second processor and a second communication interface.

The second communication interface is configured to receive a first network policy and transmit the first network policy to at least one terminal.

The embodiments of the present application further provide a third network device, which includes: a third processor and a third communication interface.

The third communication interface is configured to transmit at least two data streams to a first User Plane Function (UPF). The first UPF represents a UPF having packet granularity coordination capability and the at least two data streams are transmitted based on a first network policy.

The embodiments of the present application further provide a first network device, which includes: a first processor and a first memory for storing a computer program executable on the processor.

The first processor is configured to execute the computer program to perform the operations of any method at the first network device side.

The embodiments of the present application further provide a second network device, which includes: a second processor and a second memory for storing a computer program executable on the processor.

The second processor is configured to execute the computer program to perform the operations of any method at the second network device side.

The embodiments of the present application further provide a third network device, which includes: a third processor and a third memory for storing a computer program executable on the processor.

The third processor is configured to execute the computer program to perform the operations of any method at the third network device side.

The embodiments of the present application further provide a storage medium having a computer program stored thereon. Herein, the computer program, when executed by a processor, implements the operations of any one of the methods at the first network device side, the operations of any one of the methods at the second network device side, or the operations of any one of the methods at the third network device side.

The embodiments of the present application provide an information processing method, an apparatus, a network device, and a storage medium. A first network device receives first information representing a relationship between at least two data streams, and determines a first network policy according to the first information. A second network device receives the first network policy and transmits the first network policy to terminals for transmitting the at least two data streams. The at least two data streams are transmitted based on the first network policy, and the third network device transmits the at least two data streams to a first UPF having packet granularity coordination capability. Based on the above embodiments, when data streams belonging to different applications support a same traffic together, the formulation of the first network policy enables multiple data streams to be carried in a same network slice or in a same PDU session, and the packet granularity synchronization operation is performed in a same UPF. Therefore, coordination guarantee for the synchronization between multiple data streams initiated by different applications is realized.

### BRIEF DESCRIPTION OF THE DRAWINGS

FIG. 1 is a schematic flow diagram of an information processing method according to embodiments of the present application.
FIG. 2 is a schematic flow diagram of another information processing method according to embodiments of the present application.
FIG. 3 is a schematic flow diagram of a third information processing method according to embodiments of the present application.
FIG. 4 is a schematic diagram of an interactive flow of an information processing method in application embodiments of the present application.
FIG. 5 is a schematic structural diagram of an information processing apparatus according to embodiments of the present application.
FIG. 6 is a schematic structural diagram of another information processing apparatus according to embodiments of the present application.
FIG. 7 is a schematic structural diagram of a third information processing apparatus according to embodiments of the present application.
FIG. 8 is a schematic structural diagram of a first network device according to embodiments of the present application.
FIG. 9 is a schematic structural diagram of a second network device according to embodiments of the present application.
FIG. 10 is a schematic structural diagram of a third network device according to embodiments of the present application.

### DETAILED DESCRIPTION

For multimedia traffics such as metaverse and XR, multiple data streams usually exist in a same traffic scenario. For example, different data streams such as audio, video, touch or other sensors exist at the same time, and multiple data streams need to be synchronized to ensure user experience. In practical applications, different data streams may be initiated by different applications. The data streams are carried in the network slices signed by the corresponding applications and processed through different UPFs. Therefore, packet granularity synchronization operations may not be performed, so that synchronization between multiple data streams cannot be ensured.

Based on this, in embodiments of the present application, a first network device receives first information representing a relationship between at least two data streams, and determines a first network policy according to the first information. A second network device receives the first network policy and transmits the first network policy to terminals for transmitting the at least two data streams. The at least two data streams are transmitted based on the first network policy. The third network device transmits the at least two data streams to a first UPF having packet granularity coordination capability. Based on the above scheme, when data streams belonging to different applications support a same traffic together, the formulation of the first network policy enables multiple data streams to be carried in a same network slice or in a same PDU session, and the packet granularity synchronization operation is performed in a same UPF. Therefore, coordination guarantee for the synchronization between multiple data streams initiated by different applications is realized.

The present application will be described in further detail below with reference to the accompanying drawings and embodiments.

First, in the embodiments of the present application, the first network device may be a PCF, the second network device may be a NEF or a RAN or a UDR or a UDM or an AMF or an SMF or an AF, and the third network device may be a PCF or an AMF or a RAN or a SMF or an AF.

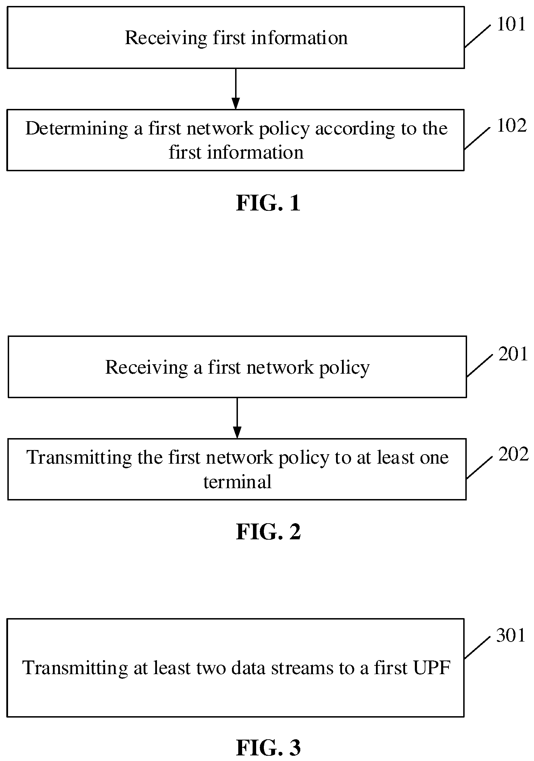

The embodiments of the present application provide an information processing method, which is applied to a first network device. As shown in FIG. 1, the method includes the following Operations.

At Operation 101, first information is received.

At Operation 102, a first network policy is determined according to the first information.

Herein, the first information is used to represent a relationship between at least two data streams.

Here, the first information is used to represent the relationship between the at least two data streams. Representing the relationship between at least two data streams includes at least one of the following:
representing that the at least two data streams belong to a data stream group;
representing that the at least two data streams constitute a data stream group;
representing that the at least two data streams belong to a same traffic;
representing that the at least two data streams carry a same traffic; and
representing that the at least two data streams are related to a same traffic.

Here, the traffic may be understood as a service, a multi-modality service, or the like.

Belonging to a data stream group may be understood as that these data streams carry identification information of a same data stream group, which is used to identify that these streams belong to the same data stream group.

Constituting the data stream group may be understood as that these data streams carry indication information, and these data streams may be processed as a group of data streams based on the indication information or with reference to the indication information or in consideration of the indication information or according to the indication information or in combination with the indication information. Here, the indication information may be the same, and then these data streams are processed as one data stream group according to the same indication information. The indication information herein may also be different. Although the indication information is different, these data streams may be processed as a data stream group based on or with reference to or in consideration of or according to or in combination with the relationship between the indication information, or according to a preconfigured rule. Here, the indication information may have other names, may be an explicit indication information specifically used to indicate the relationship between data streams, or may be existing parameters or fields or information. The first network device processes the data streams as a data stream group according to the relationship between the indication information and/or pre-configured rules.

Belonging to the same traffic may be understood as that multiple data streams have a common identifier, which indicates that these data streams belong to the same traffic.

Carrying the same traffic may be understood as that the data, information or content of the traffic are carried by these data streams.

Related to the same traffic may be understood as that these data streams serve the same traffic, or these data streams support the same traffic, or the like, or otherwise indicate that these data streams are related to the same traffic.

In the actual application, the at least two data streams coordinately support the first traffic, and different data streams belong to different applications. Or, when different applications run on different terminals, it may also be understood as that different data streams belong to different terminals. For example, in the XR traffic, it is necessary to synchronize the data stream output to the VR glasses and the data stream output to the force feedback device, then the two data streams belong to the VR application and the force feedback application respectively. In other words, the two data streams belong to the two terminals, i.e., the VR glasses and the force feedback device, respectively.

In actual applications, when the application signs up, it will inform the network side which data streams the application will involve need to be synchronized with other applications. For example, application 1 informs the network side which data streams of application 1 need to be synchronized with data streams of application 2 and application 3.

In actual applications, after terminals corresponding to at least two different applications that simultaneously support the first traffic access a AF, the AF recognizes that these applications simultaneously process the first service, and at this time, the AF reports first information to request determination of the first network policy for the data streams that coordinately support the first service.

In an embodiment, the first information includes at least one of: application information, IP quintuple information of the application, application group information, a QoS requirement of the application, common ID, data stream group information, network slice information, DNN, QoS monitoring requirement, time information related to the first network policy, and time interval during which the first network policy is executed. The time interval may be described as a time window or a time period, and the QoS monitoring requirement includes at least one of a reporting frequency, a reporting duration, and a reporting path.

In practical application, the first information may be transmitted by the AF or the NEF and transmitted to the first network device.

Specifically, transmitting the first information may be achieved by adding a new piece of information, i.e., Application coordination, into a Route Selection Descriptor, which indicates that at least two data streams belong to or constitute a data stream group.

In case that the first information is transmitted by the AF, service requirements of the at least two data streams are the same.

Further, if the first network policy is URSP, the service requirements of the at least two data streams are the same, which includes:
The traffic requirements of the at least two data streams formulated for the URSP are the same.

Here, the traffic requirements of the at least two data streams formulated for the URSP are the same. When the data streams are transmitted by one terminal, these data streams may be ensured to be carried in one PDU session. Or, when the data streams are transmitted by multiple terminals, the data streams may be ensured to be carried in the same network slice or a PDU session corresponding to the same DNN combination.

In the present embodiment, determining the first network policy may include determining, identifying, or formulating the first network policy by the first network device itself, or formulating the first network policy by another network device and obtaining the first network policy by the first network device from the other network device. Here, determining the first network policy according to the first information may also be understood as determining the first network policy in consideration of the first information, or determining the first network policy based on the first information, or determining the first network policy with reference to the first information, or determining the first network policy in combination with the first information.

In an embodiment, the first network policy includes at least one of the following:
the at least two data streams are carried by a same PDU session;
network slice selection policies or URSPs for the at least two data streams are the same;
when a URSP corresponding to at least one data stream in a data stream group changes, URSPs corresponding to other data streams in the data stream group are updated;
the at least two data streams correspond to at least one of a same network slice or a same DNN; and
policy information related to QoS monitoring for the at least two data streams is the same.

Here, the policy information includes at least one of a reporting frequency, a reporting duration, and a reporting path.

Herein, when the URSP corresponding to at least one data stream in a data stream group is changed, the URSPs corresponding to other data streams in the data stream group are updated. In such a way, it ensures that the network slices selected for one data stream group or a group of data streams are the same, or it ensures that one data stream group or a group of data streams are carried by the same PDU session.

In an embodiment, the first network policy includes at least one of the following:
in case that the at least two data streams correspond to different network slices, at least one of URSPs, URSP priorities and network slice selection policies corresponding to the data streams is updated; or
in case that the at least two data streams correspond to different network slices, coordination transmission of the at least two data streams in different network slices is supported.

Herein, updating the URSPs and/or the URSP priorities and/or the network slice selection policies corresponding to the data stream may ensure that the at least two data streams correspond to one network slice.

The embodiments of the present application further provide an information processing method, which is applied to a second network device. As shown in FIG. 2, the method includes the following Operations.

At Operation 201, a first network policy is received.

At Operation 202, the first network policy is transmitted to at least one terminal.

As described above, in an embodiment, the first network policy includes at least one of the following:
at least two data streams are carried by a same PDU session;
network slice selection policies or URSPs for the at least two data streams are the same;
when a URSP corresponding to at least one data stream in a data stream group changes, URSPs corresponding to other data streams in the data stream group are updated;
the at least two data streams correspond to at least one of a same network slice or a same DNN; and
policy information related to QoS monitoring for the at least two data streams is the same. Herein, the policy information includes at least one of a reporting frequency, a reporting duration, or a reporting path.

In an embodiment, the first network policy includes at least one of the following:
in case that at least two data streams correspond to different network slices, at least one of URSPs, URSP priorities and network slice selection policies corresponding to the data streams is updated; and
in case that at least two data streams correspond to different network slices, coordination transmission of the at least two data streams in different network slices is supported.

The embodiments of the present application further provide an information processing method, which is applied to a third network device. As shown in FIG. 3, the method includes the following operations.

At Operation 401, at least two data streams are transmitted to a first UPF.

Herein, the first UPF represents a UPF having packet granularity coordination capability. The at least two data streams are transmitted based on a first network policy.

As described above, in an embodiment, the first network policy includes at least one of the following:
the at least two data streams are carried by a same PDU session;
network slice selection policies or URSPs for the at least two data streams are the same;
when a URSP corresponding to at least one data stream in a data stream group changes, URSPs corresponding to other data streams in the data stream group are updated;
the at least two data streams correspond to at least one of a same network slice or a same DNN; and
policy information related to QoS monitoring for the at least two data streams is the same. Herein, the policy information includes at least one of a reporting frequency, a reporting duration, and a reporting path.

In an embodiment, the first network policy includes at least one of the following:
in case that the at least two data streams correspond to different network slices, at least one of URSPs, URSP priorities or network slice selection policies corresponding to the data streams is updated; and
in case that the at least two data streams correspond to different network slices, coordination transmission of the at least two data streams in different network slices is supported.

In an embodiment, the operation of transmitting the at least two data streams to the first UPF includes that:
at least two data streams are transmitted to the first UPF in case that at least one terminal initiates a PDU session or a PDU session update.

Herein the at least one terminal represents at least one terminal for transmitting the at least two data streams.

In one embodiment, the UPF having packet granularity coordination capability represents a UPF capable of synchronously processing different data packets corresponding to a same time in the at least two data streams.

Here, after the terminal receives the updated first policy, when the terminal initiates the PDU session or the PDU session update, the third network device needs to find a UPF having the packet granularity coordination function in the interaction of the N4 interface. Specifically, the third network device transmits the at least two data streams to the first UPF, so that the first UPF performs coordination between the at least two data streams according to the label of packet granularity, and may perform synchronous processing on the capabilities of different data packets corresponding to a same time in at least two data streams, so as to achieve the purpose of multi-data stream coordination.

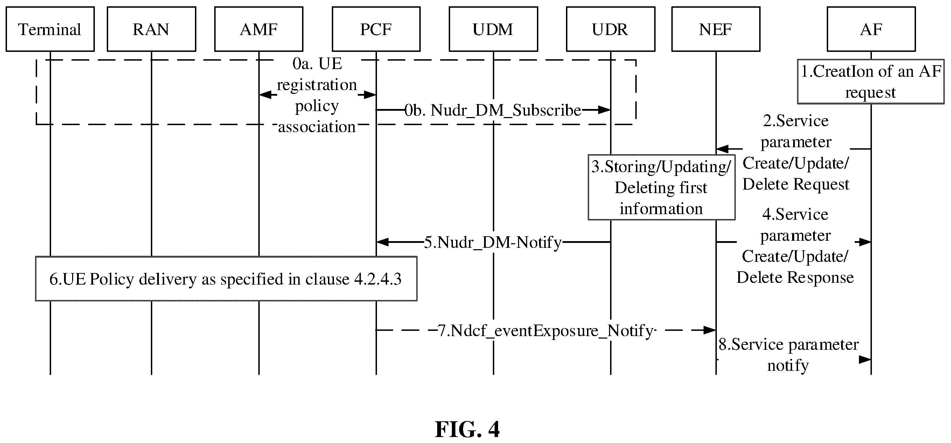

In connection with the above embodiment, FIG. 4 shows an application embodiment suitable for the above embodiments. Herein, first information is added to a service parameter Create/Update/Delete Request (Nnef_ServiceParameter_Create/Update/Delete Request) sent by the AF to the NEF. In the Nudr_DM_Notify transmitted by the UDR to the PCF, the first information is written into the PCF. After that, the updated URSP is transmitted to the terminal.

In the embodiments of the present application, when data streams belonging to different applications support the same service together, the data streams are grouped so these multiple data streams may be carried in the same network slice or the same PDU session, and the packet granularity synchronization operation is performed in the same UPF. However, in the related art, URSP is adjusted only according to the location of the device. Compared with the related art, the embodiments of the present application adds a scheme that a first network policy is formulated according to the first information, which realizes coordination guarantee for synchronization between a plurality of data streams initiated by different applications.

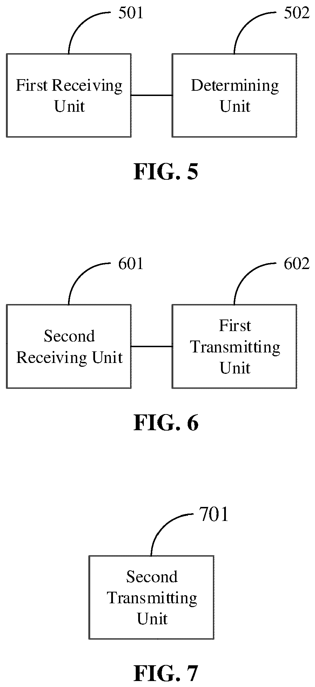

In order to realize the information processing method at the first network device side according to the embodiments of the present application, the embodiments of the present application further provides an information processing apparatus disposed on the first network device. As shown in FIG. 5, the apparatus includes a first receiving unit 501 and a determining unit 502.

The first receiving unit 501 is configured to receive first information.

The determining unit 502 is configured to determine a first network policy according to the first information.

The first information is used to represent a relationship between at least two data streams.

Herein, in an embodiment, representing the relationship between the at least two data streams includes at least one of the following:
representing that the at least two data streams belong to a data stream group;
representing that the at least two data streams constitute a data stream group;
representing that the at least two data streams belong to a same traffic;
representing that the at least two data streams carry a same traffic; and
representing that the at least two data streams are related to a same traffic.

In an embodiment, the first information includes at least one of:
application information, IP quintuple information of an application, application group information, an QoS requirement of the application, a common ID, data stream group information, network slice information, a DNN, a QoS monitoring requirement, time information related to the first network policy, and a time interval during which the first network policy is executed.

The QoS monitoring requirement includes at least one of a reporting frequency, a reporting duration, and a reporting path.

In an embodiment, the first information is transmitted by an AF or a NEF.

In an embodiment, the first network policy includes at least one of the following:
the at least two data streams are carried by a same PDU session;
network slice selection policies or URSPs for the at least two data streams are the same;
when a URSP corresponding to at least one data stream in a data stream group changes, URSPs corresponding to other data streams in the data stream group are updated;
the at least two data streams correspond to at least one of a same network slice or a same DNN; and
policy information related to QoS monitoring for the at least two data streams is the same. The policy information includes at least one of a reporting frequency, a reporting duration, or a reporting path.

In an embodiment, the first network policy includes at least one of the following:
in case that the at least two data streams correspond to different network slices, at least one of URSPs, URSP priorities or network slice selection policies corresponding to the data streams is updated; and
in case that the at least two data streams correspond to different network slices, coordination transmission of the at least two data streams in different network slices is supported.

In an embodiment, the apparatus further includes a third transmitting unit.

The third transmitting unit is configured to transmit the first network policy to a second network device.

In an embodiment, the first network device includes a PCF.

In practical application, the first receiving unit 501 and the third transmitting unit may be implemented by a communication interface in the information processing apparatus, and the determining unit 502 may be implemented by a processor in the information processing apparatus.

In order to realize the information processing method at the second network device side in the embodiments of the present application, the embodiments of the present application further provides an information processing apparatus disposed on the second network device. As shown in FIG. 6, the apparatus includes a second receiving unit 601 and a first transmitting unit 602.

The second receiving unit 601 is configured to receive a first network policy.

The first transmitting unit 602 is configured to transmit the first network policy to at least one terminal.

Herein, in an embodiment, the first network policy includes at least one of the following:
at least two data streams are carried by a same PDU session;
network slice selection policies or URSPs for the at least two data streams are the same;
when a URSP corresponding to at least one data stream in a data stream group changes, URSPs corresponding to other data streams in the data stream group are updated;
the at least two data streams correspond to at least one of a same network slice or a same DNN; and
policy information related to QoS monitoring for the at least two data streams is the same. Herein the policy information includes at least one of a reporting frequency, a reporting duration, or a reporting path.

In an embodiment, the first network policy includes at least one of the following:
in case that at least two data streams correspond to different network slices, at least one of URSPs, URSP priorities or network slice selection policies corresponding to the data streams is updated; and
in case that at least two data streams correspond to different network slices, coordination transmission of the at least two data streams in different network slices is supported.

In an embodiment, the second network device includes one of: a NEF, a RAN, a UDR, a UDM, an AMF, a SMF and an AF.

In practical application, the second receiving unit 601 and the first transmitting unit 602 may be realized by a communication interface in the information processing apparatus.

In order to realize the information processing method at the third network device side in the embodiments of the present application, the embodiments of the present application further provides an information processing apparatus disposed on the third network device. As shown in FIG. 7, the apparatus includes a second transmitting unit 701.

The second transmitting unit 701 is configured to transmit at least two data streams to the first UPF.

The first UPF represents a UPF having packet granularity coordination capability. The at least two data streams are transmitted based on a first network policy.

Herein, in an embodiment, the first network policy includes at least one of the following:
the at least two data streams are carried by a same PDU session;
network slice selection policies or URSPs for the at least two data streams are the same;
when a URSP corresponding to at least one data stream in a data stream group changes, URSPs corresponding to other data streams in the data stream group are updated;
the at least two data streams correspond to at least one of a same network slice or a same DNN; and
Policy information related to QoS monitoring for the at least two data streams is the same. Herein the policy information includes at least one of a reporting frequency, a reporting duration, or a reporting path.

In an embodiment, the first network policy includes at least one of the following:
in case that the at least two data streams correspond to different network slices, at least one of URSPs, URSP priorities and network slice selection policies corresponding to the data streams is updated; and
in case that the at least two data streams correspond to different network slices, coordination transmission of the at least two data streams in different network slices is supported.

In an embodiment, the second transmitting unit 701 is configured to transmit the at least two data streams to the first UPF in case that at least one terminal initiates a PDU session or a PDU session update.

The at least one terminal represents at least one terminal for transmitting the at least two data streams.

In one embodiment, the UPF having the packet granularity coordination capability represents a UPF capable of synchronously processing different data packets corresponding to a same time in the at least two data streams.

In an embodiment, the third network device includes one of: a PCF, an AMF, a RAN, a SMF, and an AF.

In practical application, the second transmitting unit 701 may be realized by a communication interface in the information processing apparatus.

It should be noted that, in the information processing apparatuses according to the above-described embodiments, when communication is performed, only the division of various program modules is described as an example. In practical application, the above-described processing may be allocated to be completed by different program modules as necessary. That is, the internal structure of the apparatus may be divided into different program modules to complete all or part of the processing described above. Further, the information processing apparatus provided in the above-described embodiment belongs to the same concept as the information processing method embodiment, and the specific implementation process thereof is detailed in the corresponding method embodiment, and will not be repeatedly described here.

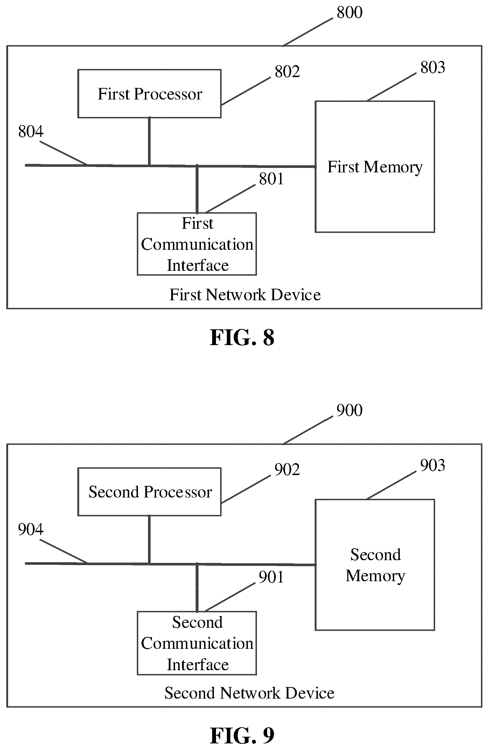

Based on the hardware implementation of the above-described program modules, and in order to implement the method at the first network device side in the embodiments of the present application, the embodiments of the present application further provides a first network device. As shown in FIG. 8, the first network device 800 includes a first communication interface 801 and a first processor 802.

The first communication interface 801 is capable of exchanging information with other network nodes.

The first processor 802 is connected to the first communication interface 801 to realize information interaction with other network nodes, and is configured to execute a computer program to perform the methods provided in one or more technical solutions at the first network device side. The computer program is stored on a first memory 803.

Specifically, the first communication interface 801 is configured to receive first information.

The first processor 802 is configured to determine a first network policy according to the first information.

The first information is used to represent a relationship between at least two data streams.

Herein, in an embodiment, representing the relationship between the at least two data streams includes at least one of the following:
representing that the at least two data streams belong to a data stream group;
representing that the at least two data streams constitute a data stream group;
representing that the at least two data streams belong to a same traffic;
representing that the at least two data streams carry a same traffic; and
representing that the at least two data streams are related to a same traffic.

In an embodiment, the first information includes at least one of:
application information, IP quintuple information of an application, application group information, an QoS requirement of the application, a common ID, data stream group information, network slice information, a DNN, a QoS monitoring requirement, time information related to the first network policy, and a time interval during which the first network policy is executed.

The QoS monitoring requirement includes at least one of a reporting frequency, a reporting duration, and a reporting path.

In an embodiment, the first information is transmitted by an AF or a NEF.

In an embodiment, the first network policy includes at least one of the following:
the at least two data streams are carried by a same PDU session;
network slice selection policies or URSPs for the at least two data streams are the same;
when a URSP corresponding to at least one data stream in a data stream group changes, URSPs corresponding to other data streams in the data stream group are updated;
the at least two data streams correspond to at least one of a same network slice or a same DNN; and
policy information related to QoS monitoring for the at least two data streams is the same. The policy information includes at least one of a reporting frequency, a reporting duration, or a reporting path.

In an embodiment, the first network policy at least one of the following:
in case that the at least two data streams correspond to different network slices, at least one of URSPs, URSP priorities or network slice selection policies corresponding to the data streams is updated; and
in case that the at least two data streams correspond to different network slices, coordination transmission of the at least two data streams in different network slices is supported.

In an embodiment, the first communication interface 801 is further configured to transmit the first network policy to a second network device.

In an embodiment, the first network device includes a PCF.

It should be noted that the specific processing procedures of the first processor 802 and the first communication interface 801 may be understood with reference to the above-described methods.

In practical application, the various components in the first network device 800 are coupled together by a bus system 804. It will be appreciated that the bus system 804 is used to enable connected communication between these components. The bus system 804 includes a power bus, a control bus, and a status signal bus in addition to a data bus. But for clarity of illustration, the various buses are designated as bus system 804 in FIG. 8.

The first memory 803 in the embodiments of the present application is used to store various types of data to support the operation of the first network device 800. Examples of such data include any computer program for operating on the first network device 800.

The methods disclosed in the above-described embodiments of the present application may be applied to or implemented by the first processor 802. The first processor 802 may be an integrated circuit chip having signal processing capabilities. In implementation, the operations of the above-described methods may be accomplished by an integrated logic circuit in hardware or instructions in the form of software in the first processor 802. The first processor 802 described above may be a general-purpose processor, a Digital Signal Processor (DSP), or other programmable logic device, a discrete gate or transistor logic device, a discrete hardware component, or the like. The first processor 802 may implement or execute the methods, operations, and logic block diagrams disclosed in the embodiments of the present application. The general-purpose processor may be a microprocessor, any conventional processor or the like. The operations of the method disclosed in combination with the embodiments of the present application may be directly embodied as execution by the hardware decoding processor, or execution by combination of hardware and software modules in the decoding processor. The software module may be located in a storage medium located in the first memory 803, and the first processor 802 reads the information in the first memory 803, to complete the operations of the aforementioned methods in combination with its hardware.

In an exemplary embodiment, the first network device 800 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general purpose processors, controllers, Micro Controller Units (MCUs), microprocessors, or other electronic components for performing the foregoing methods.

Based on the hardware implementation of the program module, and in order to implement the methods at the second network device side in the embodiments of the present application, the embodiments of the present application further provides a second network device. Herein, the second network device is a source base station for AF handover. As shown in FIG. 9, the second network device 900 includes a second communication interface 901 and a second processor 902.

The second communication interface 901 is capable of exchanging information with other network nodes.

The second processor 902 is connected to the second communication interface 901 to realize information interaction with other network nodes, and is configured to execute a computer program to perform the method provided by one or more technical solutions at the second network device side. The computer program is stored in the second memory 903.

Specifically, the second communication interface 901 is configured to receive a first network policy and transmit the first network policy to at least one terminal.

Here, in an embodiment, the first network policy includes at least one of the following:
at least two data streams are carried by a same PDU session;
network slice selection policies or URSPs for the at least two data streams are the same;
when a URSP corresponding to at least one data stream in a data stream group changes, URSPs corresponding to other data streams in the data stream group are updated;
the at least two data streams correspond to at least one of a same network slice or a same DNN; and
policy information related to QoS monitoring for the at least two data streams is the same. Herein the policy information includes at least one of a reporting frequency, a reporting duration, or a reporting path.

In an embodiment, the first network policy includes at least one of the following:
in case that at least two data streams correspond to different network slices, at least one of URSPs, URSP priorities or network slice selection policies corresponding to the data streams is updated; and
in case that at least two data streams correspond to different network slices, coordination transmission of the at least two data streams in different network slices is supported.

In an embodiment, the second network device includes one of: a NEF, a RAN, a UDR, a UDM, an AMF, a SMF and an AF.

It should be noted that the specific processing procedures of the second processor 902 and the second communication interface 901 may be understood with reference to the above-described methods.

In practical application, the various components in the second network device 900 are coupled together by a bus system 904. It will be appreciated that the bus system 904 is used to enable connected communication between these components. The bus system 904 includes a power bus, a control bus, and a status signal bus in addition to a data bus. But for clarity of illustration, the various buses are designated as bus system 904 in FIG. 9.

The second memory 903 in the embodiments of the present application is used to store various types of data to support the operation of the second network device 900. Examples of such data include any computer program for operating on the second network device 900.

The methods disclosed in the above-described embodiments of the present application may be applied to or implemented by the second processor 902. The second processor 902 may be an integrated circuit chip having signal processing capabilities. In implementation, the operations of the above-described methods may be accomplished by an integrated logic circuit in hardware or instructions in the form of software in the second processor 902. The second processor 902 described above may be a general-purpose processor, a DSP, or other programmable logic device, a discrete gate or transistor logic device, a discrete hardware component, or the like. The second processor 902 may implement or execute the methods, operations, and logic block diagrams disclosed in the embodiments of the present application. The general-purpose processor may be a microprocessor, any conventional processor or the like. The operations of the method disclosed in combination with the embodiments of the present application may be directly embodied as execution by the hardware decoding processor, or execution by combination of hardware and software modules in the decoding processor. The software module may be located in a storage medium located in the second memory 903, and the second processor 902 reads the information in the second memory 903, to complete the operations of the aforementioned methods in combination with its hardware.

In an exemplary embodiment, the second network device 900 may be implemented by one or more ASICs, DSPs, PLDs, CPLDs, FPGAs, general purpose processors, controllers, MCUs, microprocessors, or other electronic components for performing the foregoing methods.

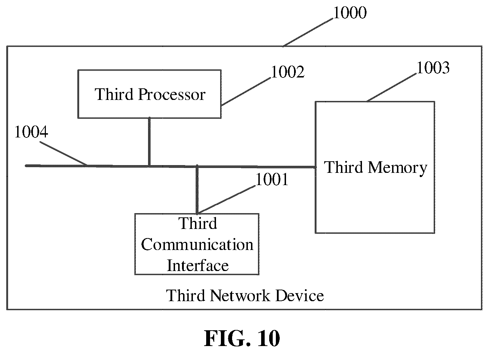

Based on the hardware implementation of the program module, and in order to implement the methods at the third network device side in the embodiments of the present application, the embodiments of the present application further provides a third network device. Herein, the third network device is a current serving base station of an AF. As shown in FIG. 10, the third network device 1000 includes a third communication interface 1001 and a third processor 1002.

The third communication interface 1001 is capable of exchanging information with other network nodes.

The third processor 1002 is connected to the third communication interface 1001 to realize information interaction with other network nodes, and is configured to execute a computer program to perform the methods provided in one or more technical solutions at the third network device side. The computer program is stored on the third memory 1003.

Specifically, the third communication interface 1001 is configured to transmit at least two data streams to the first UPF.

The first UPF represents a UPF having packet granularity coordination capability. The at least two data streams are transmitted based on a first network policy.

Herein, in an embodiment, the first network policy includes at least one of the following:
the at least two data streams are carried by a same PDU session;
network slice selection policies or URSPs for the at least two data streams are the same;
when a URSP corresponding to at least one data stream in a data stream group changes, URSPs corresponding to other data streams in the data stream group are updated;
the at least two data streams correspond to at least one of a same network slice or a same DNN; and
Policy information related to QoS monitoring for the at least two data streams is the same. Herein the policy information includes at least one of a reporting frequency, a reporting duration, or a reporting path.

In an embodiment, the first network policy includes at least one of the following:
in case that the at least two data streams correspond to different network slices, at least one of URSPs, URSP priorities and network slice selection policies corresponding to the data streams is updated; and
in case that the at least two data streams correspond to different network slices, coordination transmission of the at least two data streams in different network slices is supported.

In an embodiment, the third communication interface 1001 is configured to transmit the at least two data streams to the first UPF in case that at least one terminal initiates a PDU session or a PDU session update.

The at least one terminal represents at least one terminal for transmitting the at least two data streams.

In one embodiment, the UPF having the packet granularity coordination capability represents a UPF capable of synchronously processing different data packets corresponding to a same time in the at least two data streams.

In an embodiment, the third network device includes one of: a PCF, an AMF, a RAN, a SMF, and an AF.

In practical application, the various components in the third network device 1000 are coupled together by the bus system 1004. It will be appreciated that the bus system 1004 is used to enable connected communication between these components. The bus system 1004 includes a power bus, a control bus, and a status signal bus in addition to a data bus. However, for the sake of clarity of illustration, the various buses are designated as bus system 1004 in FIG. 10.

The third memory 1003 in the embodiments of the present application is used to store various types of data to support the operation of the third network device 1000. Examples of such data include any computer program for operating on the third network device 1000.

The methods disclosed in the above-described embodiments of the present application may be applied to or implemented by the third processor 1002. The third processor 1002 may be an integrated circuit chip having signal processing capabilities. In the implementation process, the operations of the above-described methods may be completed by an integrated logic circuit in hardware or instructions in the form of software in the third processor 1002. The third processor 1002 described above may be a general-purpose processor, a DSP, or other programmable logic device, a discrete gate or transistor logic device, a discrete hardware component, or the like. The third processor 1002 may implement or execute the methods, operations, and logic block diagrams disclosed in the embodiments of the present application. The general-purpose processor may be a microprocessor, any conventional processor or the like. The operations of the methods disclosed in combination with the embodiments of the present application may be directly embodied as execution by the hardware decoding processor, or execution by combination of hardware and software modules in the decoding processor. The software module may be located in a storage medium located in the third memory 1003, and the third processor 1002 reads the information in the third memory 1003, to complete the operations of the aforementioned method in combination with its hardware.

In an exemplary embodiment, the third network device 1000 may be implemented by one or more ASICs, DSPs, PLDs, CPLDs, FPGAs, general-purpose processors, controllers, MCUs, Microprocessors, or other electronic components for performing the foregoing methods.

It may be understood that each of the memories (the first memory 803, the second memory 903, and the third memory 1003) in the embodiments of the present application may be a volatile memory or a non-volatile memory, and may include both the volatile memory and the non-volatile memory. The non-volatile memory may be a read-only memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory (Flash Memory), a magnetic surface memory, an optical disc, or a Compact Disc Read-Only Memory (CD-ROM). The magnetic surface memory may be a magnetic disk memory or a magnetic tape memory. The volatile memory may be a Random Access Memory (RAM), which serves as an external cache. By way of illustration, but not limitation, many forms of RAM are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRAM), an Enhanced Synchronous Dynamic Random Access Memory (ESDRAM), a SyncLink Dynamic Random Access Memory (SLDRAM), a Direct Rambus Random Access Memory (DRRAM,). The memory described in the embodiments of the present application is intended to include, but is not limited to, these and any other suitable type of memory.

In an exemplary embodiment, the embodiments of the present application further provide a storage medium, that is, a computer storage medium, specifically a computer-readable storage medium, for example, including a first memory 803 storing a computer program. The computer program may be executed by the first processor 802 of the first network device 800 to complete the operations of the methods described at the first network device side. As another example, the computer-readable storage medium includes the second memory 903 storing a computer program. The computer program may be executed by the second processor 902 of the second network device 900 to complete the operations of the methods at the second network device side. As another example, the computer-readable storage medium includes the third memory 1003 storing a computer program. The computer program may be executed by the third processor 1002 of the third network device 1000 to complete the operations of the methods at the third network device side. The computer-readable storage medium may be a memory such as a FRAM, a ROM, a PROM, an EPROM, an EEPROM, a Flash Memory, a magnetic surface memory, an optical disc, or a CD-ROM.

It should be noted that "first", "second", and the like are used to distinguish similar objects, and are not necessarily used to describe a specific order or sequence.

Herein, the term "and/or" is only an association relationship describing an association object, and means that there may be three relationships. For example, A and/or B, may mean that A alone exists, both A and B exist, and B alone exists. In addition, the term "at least one" herein means any one of the plurality or any combination of at least two of the plurality. For example, including at least one of A, B, and C may mean including any one or more elements selected from the set consisting of A, B, and C.

In addition, the solutions described in the embodiments of the present application may be arbitrarily combined as long as there is no conflict.

The above description is merely a preferred embodiment of the present application, and is not intended to limit the scope of protection of the present application.

## Claims

1. An information processing method, performed by a first network device, comprising:
receiving first information; and
determining a first network policy according to the first information, the first information being used to represent a relationship between at least two data streams.

2. The method of claim 1, wherein the relationship between the at least two data streams comprises at least one of the following:
the at least two data streams belong to a data stream group;
the at least two data streams constitute a data stream group;
the at least two data streams belong to a same traffic;
the at least two data streams carry a same traffic; or
the at least two data streams are related to a same traffic.

3. The method of claim 1, wherein the first information comprises at least one of the following:
application information, Internet Protocol (IP) quintuple information of an application, application group information, an Quality of Service (QoS) requirement of the application, a common identifier (ID), data stream group information, network slice information, a Data Network Name (DNN), a QoS monitoring requirement, time information related to the first network policy, or a time interval during which the first network policy is executed,
wherein the QoS monitoring requirement comprises at least one of a reporting frequency, a reporting duration, or a reporting path.

4. The method of claim 1, wherein the first information is transmitted by an Application Function (AF) or a Network Exposure Function (NEF).

5. The method of claim 1, wherein the first network policy comprises at least one of the following:
the at least two data streams are carried by a same Protocol Data Unit (PDU) session;
network slice selection policies or User Equipment (UE) Routing Selection Policies (URSPs) for the at least two data streams are the same;
when a URSP corresponding to at least one data stream in a data stream group changes, URSPs corresponding to other data streams in the data stream group are updated;
the at least two data streams correspond to at least one of a same network slice or a same Data Network Name (DNN); or
policy information related to Quality of Service (QoS) monitoring for the at least two data streams is the same, wherein the policy information comprises at least one of a reporting frequency, a reporting duration, or a reporting path.

6. The method of claim 1, wherein the first network policy comprises at least one of the following:
in case that the at least two data streams correspond to different network slices, at least one of User Equipment (UE) Routing Selection Policies (URSPs), URSP priorities or network slice selection policies corresponding to the data streams is updated; or
in case that the at least two data streams correspond to different network slices, coordination transmission of the at least two data streams in different network slices is supported.

7. The method of claim 1, further comprising:
transmitting the first network policy to a second network device.

8. The method of any one of claims 1 to 7, wherein the first network device comprises a Policy Control Function (PCF).

9. An information processing method, performed by a second network device, comprising:
receiving a first network policy; and
transmitting the first network policy to at least one terminal.

10. The method of claim 9, wherein the first network policy comprises at least one of the following:
at least two data streams are carried by a same Protocol Data Unit (PDU) session;
network slice selection policies or User Equipment (UE) Routing Selection Policies (URSPs) for the at least two data streams are the same;
when a URSP corresponding to at least one data stream in a data stream group changes, URSPs corresponding to other data streams in the data stream group are updated;
the at least two data streams correspond to at least one of a same network slice or a same Data Network Name (DNN); or
policy information related to Quality of Service (QoS) monitoring for the at least two data streams is the same, wherein the policy information comprises at least one of a reporting frequency, a reporting duration, or a reporting path.

11. The method of claim 9, wherein the first network policy comprises at least one of the following:
in case that at least two data streams correspond to different network slices, at least one of User Equipment (UE) Routing Selection Policies (URSPs), URSP priorities or network slice selection policies corresponding to the data streams is updated; or
in case that at least two data streams correspond to different network slices, coordination transmission of the at least two data streams in different network slices is supported.

12. The method of any one of claims 9 to 11, wherein the second network device comprises one of:
a Network Exposure Function (NEF), a Radio Access Network (RAN), a Unified Data Repository (UDR), a Unified Data Management (UDM) Function, an Access and Mobility Management Function (AMF), a Session Management Function (SMF) or an Application Function (AF).

13. An information processing method, performed by a third network device, comprising:
transmitting at least two data streams to a first User Plane Function (UPF), the first UPF representing a UPF having packet granularity coordination capability and the at least two data streams being transmitted based on a first network policy.

14. The method of claim 13, wherein the first network policy comprises at least one of the following:
the at least two data streams are carried by a same Protocol Data Unit (PDU) session;
network slice selection policies or User Equipment (UE) Routing Selection Policies (URSPs) for the at least two data streams are the same;
when a URSP corresponding to at least one data stream in a data stream group changes, URSPs corresponding to other data streams in the data stream group are updated;
the at least two data streams correspond to at least one of a same network slice or a same Data Network Name (DNN); or
policy information related to Quality of Service (QoS) monitoring for the at least two data streams is the same, wherein the policy information comprises at least one of a reporting frequency, a reporting duration, or a reporting path.

15. The method of claim 13, wherein the first network policy comprises at least one of the following:
in case that the at least two data streams correspond to different network slices, at least one of User Equipment (UE) Routing Selection Policies (URSPs), URSP priorities or network slice selection policies corresponding to the data streams is updated; or
in case that the at least two data streams correspond to different network slices, coordination transmission of the at least two data streams in different network slices is supported.

16. The method of claim 13, wherein transmitting the at least two data streams to the first UPF comprises:
transmitting the at least two data streams to the first UPF in case that at least one terminal initiates a PDU session or a PDU session update, wherein the at least one terminal represents at least one terminal for transmitting the at least two data streams.

17. The method of claim 13, wherein the UPF having the packet granularity coordination capability represents a UPF capable of synchronously processing different data packets corresponding to a same time in the at least two data streams.

18. The method of any one of claims 13 to 17, wherein the third network device comprises one of:
a Policy Control Function (PCF), an Access and Mobility Management Function (AMF), a Radio Access Network (RAN), a Session Management Function (SMF) or an Application Function (AF).

19. An information processing apparatus, comprising:
a first receiving unit, configured to receive first information; and
a determining unit, configured to determine a first network policy according to the first information, the first information being used to represent a relationship between at least two data streams.

20. An information processing apparatus, comprising:
a second receiving unit, configured to receive a first network policy; and
a first transmitting unit, configured to transmit the first network policy to at least one terminal.

21. An information processing apparatus, comprising:
a second transmitting unit, configured to transmit at least two data streams to a first User Plane Function (UPF), the first UPF representing a UPF having packet granularity coordination capability and the at least two data streams being transmitted based on a first network policy.

22. A first network device, comprising:
a first communication interface, configured to receive first information; and
a first processor, configured to determine a first network policy according to the first information, the first information being used to represent a relationship between at least two data streams.

23. A second network device, comprising:
a second processor; and
a second communication interface, configured to receive a first network policy and transmit the first network policy to at least one terminal.

24. A third network device, comprising:
a third processor; and
a third communication interface, configured to transmit at least two data streams to a first User Plane Function (UPF), the first UPF representing a UPF having packet granularity coordination capability and the at least two data streams being transmitted based on a first network policy.

25. A first network device, comprising:
a first processor; and
a first memory for storing a computer program executable on the processor,
wherein the first processor is configured to execute the computer program to perform the operations of the method of any one of claims 1 to 8.

26. A second network device comprising:
a second processor; and
a second memory for storing a computer program executable on the processor,
wherein the second processor is configured to execute the computer program to perform the operations of the method of any one of claims 9 to 12.

27. A third network device comprising:
a third processor; and
a third memory for storing a computer program executable on the processor,
wherein the third processor is configured to execute the computer program to perform the operations of the method of any one of claims 13 to 18.

28. A storage medium having a computer program stored thereon, wherein the computer program, when executed by a processor, implements the operations of the method of any one of claims 1 to 8, or implements the operations of the method of any one of claims 9 to 12, or implements the operations of the method of any one of claims 13 to 18.
